# EUROPÄISCHE PATENTSCHRIFT

(11) **EP 3 185 680 B1**
(45) Veröffentlichungstag und Bekanntmachung des Hinweises auf die Patenterteilung: **12.07.2023**
(21) Anmeldenummer: 15757466.6
(22) Anmeldetag: 25.08.2015
(51) Int. Cl.: A01M 7/00

(54) **LANDWIRTSCHAFTLICHE VERTEILMASCHINE MIT EINEM SYSTEM ZUR AUTOMATISIERTEN ANSTEUERUNG VON SPRITZPROFILEN**
AGRICULTURAL SPRAYER COMPRISING A SYSTEM FOR THE AUTOMATIC CONTROL OF SPRAYING PROFILES
PULVÉRISATEUR AGRICOLE COMPRENANT UN SYSTÈME POUR LE CONTROL AUTOMATIQUE DES PROFILES DE PULVÉRISATION

(30) Priorität: 29.08.2014 DE 102014112441
(43) Veröffentlichungstag der Anmeldung: 05.07.2017
(73) Patentinhaber: HORSCH LEEB Application Systems GmbH, 94405 Landau an der Isar (DE)
(72) Erfinder: LEEB, Theodor, 94562 Oberpöring (DE)
(74) Vertreter: Benninger, Johannes
(86) Internationale Anmeldenummer: PCT/EP2015/069437
(87) Internationale Veröffentlichungsnummer: WO 2016/030368

(56) Entgegenhaltungen:
- EP-A1- 2 898 773
- EP-A2- 2 022 329
- EP-B1- 2 898 773
- WO-A1-97/12688

## Beschreibung

Die vorliegende Erfindung betrifft eine landwirtschaftliche Verteilmaschine mit einem System zur automatisieren Ansteuerung dieser, auf Basis von Spritzprofilen, mit den Merkmalen des unabhängigen Anspruches 1. Die Erfindung betrifft zudem ein Verfahren zum Ausbringen von flüssigen und/oder festen Pflanzenschutzmitteln mittels einer Verteilvorrichtung mit den Merkmalen des unabhängigen Verfahrensanspruchs 10.

Landwirtschaftliche Verteilmaschinen bzw. sog. Feldspritzen werden zum Ausbringen bzw. zur Applikation von flüssigen und/oder festen Pflanzenschutz- und/oder Düngemittel verwendet. Derartige Feldspritzen mit einer quer zur Fahrtrichtung orientierten und über einen Pflanzenbestand bewegten Verteilvorrichtung, gebildet normalerweise durch ein Spritzgestänge, sind in unterschiedlichen Ausführungsvarianten bekannt, so bspw. als selbstfahrende oder mittels eines Zugfahrzeuges gezogene oder angehängte Feldspritze.

Mit all diesen Feldspritzen soll das Ziel verfolgt werden, ein definiertes Flüssigkeitsvolumen an Pflanzenschutzmittel, bspw. in Form sog. Pestizide oder Düngemittel gleichmäßig und mit definierbarer Intensität auf einem Pflanzenbestand auszubringen, wobei das Verteilen des Flüssigkeitsvolumens möglichst in Abhängigkeit vom jeweils auszubringenden Pflanzenschutzmittel erfolgen soll. Um eine möglichst gleichmäßige Verteilung zu erreichen, sind aus dem Stand der Technik verschiedene Möglichkeiten bekannt.

Am Spritzgestänge der Verteilvorrichtung sind in Abständen zueinander angeordnete Düsenstöcke vorhanden. An diesen Düsenstöcken ist wiederum wenigstens eine Spritzdüse, in der Regel jedoch mehrere Spritzdüsen angebracht. Die Spritzdüsen erzeugen jeweils einen zum Boden bzw. zum Pflanzenbestand hin ausgerichteten Sprühkegel zum gewünschten Verteilen der Pflanzenschutzmittel. In Abhängigkeit der Anzahl und der Art der jeweils angesteuerten Spritzdüsen lassen sich somit unterschiedliche Düsenprofile konfigurieren.

Ein Düsenstock, dem mehrere Spritzdüsen mit unterschiedlichen Eigenschaften zugeordnet sind, ist bspw. durch die DE 10 2011 053 420 A1 bekannt geworden. Je nach gewünschtem Tropfen- oder Ausbringspektrum können unterschiedliche Spritzdüsen angesteuert bzw. unterschiedliche Düsenprofile erzeugt werden.

Neben der Definition von Düsenprofilen mit unterschiedlichen Düsenteilungen sind an bekannten Verteilvorrichtungen noch weitere Parameter zur Variation der Sprühkegel bzw. zur Erreichung der gewünschten Verteilgenauigkeit der Pflanzenschutzmittel vorhanden. So besteht eine Variation in einer Veränderung der Höhenführung, also in der Änderung des Abstandes zwischen Pflanzenbestand bzw. der Bodenoberfläche zur Verteilvorrichtung, was sich insbesondere auf die sog. Abdrift positiv bzw. negativ auswirken kann. Eine weitere Variation besteht in der Verwendung von unterschiedlichen Spritzdrücken, also dem Spritzdruck mit dem das Pflanzenschutzmittel über dem Bestand ausgebracht wird. Dieser Spritzdruck ist u. a. von der Fahrgeschwindigkeit sowie der Ausbringmenge abhängig.

Um eine für das jeweils auszubringende Pflanzenschutzmittel gewünschte bzw. benötigte Verteilung zu erreichen, müssen jeweils die Variationen bzw. Parameter zwischen Düsenprofil, Höhenführung und Spritzdruck aufeinander abgestimmt sein.

Aus dem Stand der Technik ist hierzu bereits ein System bekannt, bei dem die Ansteuerung von verschiedenen Spritzdüsen automatisiert auf Basis des aktuell an der Verteilvorrichtung vorhandenen Spritzdrucks erfolgt. Wobei jedoch für einen Anwender bzw. einen Bediener keine Möglichkeit besteht, zu definieren, welche Spritzdüsenkombinationen angesteuert werden sollen. Auch ist aus dem Stand der Technik noch kein System bekannt, bei dem neben einer automatisierten Ansteuerung von verschiedenen Spritzdüsenkombinationen auch eine automatisierte Anpassung der Höhenführung erfolgt. Bislang musste die Höhenführung jeweils manuell angepasst werden. Ein derartiges System ist jedoch insbesondere bei häufigen Änderungen der Fahrgeschwindigkeit oder der Ausbringmenge nicht komfortabel bzw. ist hierdurch eine Steuerung der Verteilvorrichtung bspw. auf Basis von GPS Daten zu träge und nicht möglich. Insbesondere beim sog. Precision Farming hat sich diese manuelle Ansteuerung als nicht praxisgerecht erwiesen, da insbesondere hier häufige und schnelle Umschaltungen der Spritzprofile bei angepasster Verteilgenauigkeit gewünscht werden.

Mit der WO 97/12688 A1 ist ein System offenbart, das die unabhängige Steuerung eines Durchflusses bzw. einer Strömungsgeschwindigkeit und einer Tropfengröße in einer mit mehreren Düsenköpfen ausgestatteten Sprühvorrichtung ermöglichen soll. Die Düsenköpfe werden auf Basis einer Programmsteuerung jeweils zwischen einer geöffneten und einer geschlossenen Lage verstellt, woraus sich eine angestrebte Strömungsgeschwindigkeit und eine angestrebte mittlere Tropfengröße durch eine pulsweitenmodulierte Ansteuerung der Düsenköpfe ergibt, etwa unter Verwendung eines beispielhaft genannten Rechteckgenerators.

Die EP 2 022 329 A2 offenbart weiterhin eine fahrbare Spritzanordnung mit einem Spritzgestänge und ein Verfahren zur Einstellung der Spritzdüsen am Spritzgestänge. Mittels mehrerer Sensoren können eine Fahrgeschwindigkeit, eine Austrittsgeschwindigkeit des Spritzmittels, eine Windgeschwindigkeit und/oder eine Windrichtung erfasst werden, um nach Verarbeitung der erfassten Messgrößen einen Spritzwinkel der Spritzdüsen bezüglich einer Vertikalen einzustellen.

Schließlich offenbart die EP 2 898 773 A1 ein Verfahren zum gesteuerten oder geregelten Ausbringen von Pflanzenschutzmittel sowie eine zur Anwendung des Verfahrens geeignete Verteilmaschine. Bei dem Verfahren wird ein Benetzungsgrad der besprühten Pflanzen erfasst, um solchermaßen die Ausbringparameter verändern und in gewünschter Weise anpassen zu können.

Der Erfindung liegt die Aufgabe zugrunde, ein System zur Verfügung zu stellen, bei dem in einer Rechnereinheit verschiedene Spritzprofile hinterlegt werden können, wobei diese Spritzprofile als Parameter bspw. ein Düsenprofil einen dazugehörigen Spritzdruck und eine dazugehörige Höhenführung beinhalten können, und bei dem bei einer Abweichung eines Parameters eines Spritzprofiles eine automatisierte Ansteuerung der Verteilvorrichtung auf Basis eines weiteren Spritzprofiles erfolgt, mittels welchem ebenso die erforderliche Verteilgenauigkeit erreicht werden kann.

Diese Aufgabe der Erfindung wird mit dem Gegenstand des unabhängigen Anspruchs 1 sowie mit einem Verfahren mit den Merkmalen des Anspruchs 10 erreicht. Merkmale vorteilhafter Weiterbildung der Erfindung ergeben sich aus den jeweiligen abhängigen Ansprüchen.

Die Erfindung sieht zunächst eine landwirtschaftliche Verteilmaschine, vorzugsweise in Form einer Feldspritze vor, welche als selbstfahrende oder als eine an einem Zugfahrzeug angebrachte bzw. angehängte Maschine ausgebildet sein kann. Derartige Feldspritzen finden zum Ausbringen von Pflanzenschutzmittel bspw. in Form von Pestiziden oder Düngemittel, Verwendung. Die Feldspritze umfasst im Wesentlichen einen Rahmen zum Tragen der einzelnen Baugruppen, einen Vorratsbehälter zum Mitführen des auszubringenden Pflanzenschutzmittels, eine Rechnereinheit zum Steuern der einzelnen Maschinenelemente und ihrer Parameter sowie eine gegenüber dem Rahmen mittels Stellelementen höhenverstellbar und sich quer zur Fahrtrichtung erstreckende Verteilvorrichtung bzw. Spritzgestänge.

An der Verteilvorrichtung sind in gleichen oder unterschiedlichen Abständen (z.B. von ca. 25cm und/oder 50cm) zueinander mehrere Düsenstöcke mit jeweils wenigstens einer, in der Regel jedoch mit mehreren daran angebrachten Spritzdüsen, angeordnet. Mittels dieser Spritzdüsen wird das Pflanzenschutzmittel möglichst entsprechend der geforderten Verteilgenauigkeit über dem Pflanzenbestand bzw. über der zu behandelnden Fläche verteilt. Hierzu erzeugen die Spritzdüsen einen zum Pflanzenbestand hin ausgerichteten Sprühkegel.

In Abhängigkeit von dem jeweils auszubringenden Pflanzenschutzmittel können in die Rechnereinheit unterschiedliche Düsenprofile angewählt oder bspw. durch einen Bediener vorgegeben werden. D.h. es ist möglich, jeweils verschiedene Kombinationen von Spritzdüsen der jeweiligen Düsenstöcke zu definieren. Auch können verschiedene Abstände von Spritzdüsen kombiniert werden, wobei diese Abstände vorzugsweise 25cm oder 50cm betragen. Hierbei werden häufig Vierfach- und/oder Zweifachdüsenstöcke verwendet, wobei an einem Vierfachdüsenstock in der Regel vier verschiedene Spritzdüsen mit jeweils unterschiedlichen Eigenschaften und an einem Zweifachdüsenstock jeweils zwei verschiedene Spritzdüsen mit jeweils unterschiedlichen Eigenschaften vorhanden sind. Es können auch einzelne Spritzdüsen des Vierfach- und des Zweifachdüsenstocks gemeinsam verschaltet bzw. kombiniert werden. Die Düsen werden in der Regel mit 1+2+3+4 und 5+6 nummeriert, d.h. eine Düsenkombination könnte bspw. 3+6 sein. Die Spritzdüsen werden hierbei wiederum auf Basis der jeweils erforderlichen Zerstäubungscharakteristik (fein-, mittel- oder grobtropfig) ausgewählt. Weiter werden die Abstrahl- bzw. Öffnungswinkel der einzelnen Sprühkegel durch eine entsprechende Wahl der Spritzdüsen beeinflusst. Durch den Abstand der einzelnen Spritzdüsen zueinander kann noch die Anzahl an Überlappung der Sprühkegel nebeneinander befindlicher Düsenstöcke variiert werden, also ob keine, eine doppelte oder mehrfache Überlappung der Sprühkegel zueinander vorliegt.

Zu jedem Düsenprofil wird darüber hinaus ein Spritzdruckbereich und/oder eine Arbeitshöhe bzw. eine Höhenführung definiert, so dass sich aus diesen wenigstens zwei, vorzugsweise jedoch drei Parametern jeweils unterschiedliche Spritzprofile ergeben. Die jeweils aktuell an der Verteilvorrichtung vorhandenen Parameter werden mittels Sensoren überwacht bzw. gemessen. Wird bspw. der Spritzdruckbereich über- oder unterschritten, erfolgt eine automatisierte Anpassung bzw. Ansteuerung der Verteilmaschine und/oder Verteilvorrichtung auf ein anderes Spritzprofil, wobei hierzu wiederum vor dem Beginn des Pflanzenschutzvorganges wenigstens zwei verschiede Spritzprofile ausgewählt werden können.

Die gewünschten Spritzprofile können mittels eines Terminals oder eines anderen Eingabegerätes in die Rechnereinheit der Verteilmaschine eingeben werden. Ebenso wäre es denkbar, dass eine Eingabe der Spritzprofile auf Basis von Kennfeldern oder mittels einer Datenbank, bspw. eines Herstellers von Pflanzenschutzmittel erfolgt. Auch andere Möglichkeiten zur Eingabe wären durchaus vorstellbar. Durch die Eingabe werden dann Steuersignale generiert, die durch Verarbeitung in der Rechnereinheit vorgeben können, welches Spritzprofil bzw. welche Verteilgenauigkeit für das jeweilige Pflanzenschutzmittel benötigt wird, um eine für das Pflanzenschutzmittel geeignete Benetzung zu erreichen.

Die Höhenführung kann mit einem Stellelement, welches zwischen dem Rahmen des Trägerfahrzeuges und der Verteilvorrichtung angeordnet ist, variabel verstellt werden. Als Stellelemente können unterschiedliche Stellglieder eingesetzt werden. Vorzugsweise können hierfür hydraulisch arbeitende Zylinder Verwendung finden. Es sind aber auch pneumatische, elektrische oder andere Stellglieder verwendbar. Der Abstand der Verteilvorrichtung zum Pflanzenbestand kann bspw. mittels an dieser angebrachten Ultraschallsensoren oder diversen anderen Abstandssensoren erfolgen. Die Höhenführung hat darüber hinaus noch einen starken Einfluss auf die Abtrift an Pflanzenschutzmittel, wobei diese in der Regel je kleiner ist, desto näher die Verteilvorrichtung über dem Pflanzenbestand geführt wird. Ein Abstandsbereich der Höhenführung liegt typischerweise ca. zwischen 25cm und 50cm.

Durch den Spritzdruck wird ein Druckbereich im Versorgungssystem der Verteilvorrichtung festgelegt, d.h. mit welchem Druck die Versorgungssysteme bzw. die Spritzdüsen beaufschlagt werden. Dieser Druckbereich kann bspw. zwei bis fünf bar betragen. Der Druckbereich wird während des Ausbringvorganges von verschiedenen Faktoren beeinflusst, bspw. von der Ausbringmenge an Pflanzenschutzmittel, wobei diese wiederum von der Fahrgeschwindigkeit der Verteilvorrichtung abhängt. Dies bedeutet, dass durch eine Änderung der Fahrgeschwindigkeit eine Veränderung an Ausbringmenge an Pflanzenschutzmittel erforderlich wird, was wiederum eine Änderung des Spritzdrucks zur Folge haben kann.

Eine automatisierte Ansteuerung der Verteilvorrichtung könnte gemäß der vorliegenden Erfindung wie folgt durchgeführt werden. Zunächst werden in einer Rechnereinheit verschiedene Düsenprofile hinterlegt, d.h. es wird definiert ob bspw. eine oder mehrere Spritzdüsen in einem Abstand von bspw. 25cm oder 50cm miteinander angesteuert werden. Hierbei sind die verschiedensten Kombinationen vorstellbar. Es sei noch darauf hingewiesen, dass nicht zwangsweise mehrere Düsen angesteuert werden müssen. Es wäre auch vorstellbar, jeweils nur eine Spritzdüse in bspw. einem Abstand von 50cm zu verwenden.

Jedem Düsenprofil werden ein Druckbereich und/oder eine Höhenführung der Verteilvorrichtung zugeordnet, d.h. es wird definiert, mit welchem Spritzdruck die jeweiligen Düsenprofile beaufschlagt werden dürfen, sowie in welchem Abstand bzw. in welcher Höhe die Verteilvorrichtung über dem Pflanzenbestand bzw. der Bodenoberfläche geführt werden soll. Diese vorzugsweise drei Parameter ergeben zusammen ein Spritzprofil, wobei in der Rechnereinheit eine Vielzahl derartiger Spritzprofile mit verschiedensten Parametern hinterlegt werden können. Zu Beginn des Ausbringvorganges kann nun bspw. ein Bediener bzw. ein Fahrzeugführer aus der Vielzahl der Spritzprofile diejenigen auswählen, mittels denen die für das jeweilig auszubringende Pflanzenschutzmittel benötigte Benetzung oder Verteilgenauigkeit erreicht werden kann. Es wäre jedoch auch vorstellbar, dass bspw. durch Eingabe in der Rechnereinheit des auszubringenden Pflanzenschutzmittels eine automatische Vorauswahl der Spritzprofile durch die Rechnereinheit erfolgt. Anschließend erfolgt der Ausbringvorgang, wobei hierzu ein erstes Spritzprofil mit dessen dazugehörigen Düsenprofil sowie dessen dazugehörigen Spritzdruck und/oder dessen dazugehöriger Höhenführung ausgewählt bzw. die Verteilvorrichtung entsprechend angesteuert wird.

Wird nun bspw. die Fahrgeschwindigkeit oder die Ausbringmenge erhöht oder verringert, wodurch dann ggf. der vorgegebene Spritzdruck unter- bzw. überschritten wird, kann dies bedeuten, dass die gewünschte Verteilgenauigkeit ggf. nicht mehr erreicht werden kann und ein anderes Spritzprofil nötig wäre, um diese zuvor angestrebte Verteilgenauigkeit wieder zu erreichen. Ist dies der Fall, erfolgt durch die Rechnereinheit eine automatisierte Ansteuerung eines anderen, i.d.R. vorher ausgewählten Spritzprofils, mit dem die gewünschte Verteilgenauigkeit wieder erreicht wird, bei dem jedoch die Parameter anders definiert sind. Das bedeutet, dass in der Verteilvorrichtung ein anderes Düsenprofil und/oder eine andere Höhenführung derartig angesteuert werden, dass die gewünschte Benetzung mit einem höheren oder geringerem Spritzdruck bzw. einer höheren Fahrgeschwindigkeit oder einer höheren Ausbringmenge erreicht wird.

Um während des Ausbringvorganges die an der Verteilvorrichtung vorhandenen Parameter zu ermitteln, sind an dieser bzw. der Feldspritze diverse Sensoren bzw. Messmittel vorhanden. Mittels dieser können u.a. die Höhenführung, der Spritzdruck, die Fahrgeschwindigkeit und/oder die Ausbringmenge bestimmt werden. Diese Werte werden anschließend in einem Istwert-Sollwert-Vergleich mit den in der Rechnereinheit hinterlegten und für das jeweilige Spritzprofil benötigten Parameter verglichen. Bei entsprechenden Abweichungen erfolgt dann wiederum das erfindungsgemäße Umsteuern der Verteilvorrichtung auf ein anderes Spritzprofil.

In einer bevorzugten Ausführungsform können die Umschaltintensitäten bzw. die Umschaltpunkte der Spritzprofile ebenso in einer Rechnereinheit mit hinterlegt werden. Dies kann bspw. mittels einer parametrierbaren Hysterese erfolgen. Ebenso kann das Umschaltverhalten derartig definiert werden, dass während der Ansteuerung der Verteilvorrichtung zwischen den Spritzprofilen weder eine starke Unter- noch Überdosierung zum Umschaltzeitpunkt (Öffnen der "neuen" Düsen zu einem parametrierbaren Zeitpunkt vor dem Schließen der "alten") auftreten. Ebenso kann eine Strategie hinterlegt werden, um während des Umschaltpunkts regelungsbedingte Druck- und damit Mengenschwankungen zu begrenzen. Dies geschieht vorzugsweise durch ein kurzzeitiges "Einfrieren" der Regelung und ein Anfahren der berechneten Punkte.

Das erfindungsgemäße Verfahren ermöglicht somit eine schnelle und variable automatisierte Anpassung der jeweiligen Spritzprofile. Dies ist insbesondere von Vorteil, wenn ein Ausbringen der Pflanzenschutzmittel auf Basis des sog. "Precision Farming" erfolgt. Der Begriff des "Precision Farming" meint in diesem Zusammenhang eine Bewirtschaftung von landwirtschaftlichen Flächen unter Berücksichtigung von kleinräumigen Heterogenitäten, bspw. in Form von einer abschnittsweise größeren Unkraut- oder Schädlingsdichte. Mit einer entsprechenden Informations- und Gerätesteuerungstechnik (GPS; GIS; Bord- und Spritzcomputer; Applikationssoftware; Bildanalyse; Sensoren; etc.) ist es möglich, diese Unkraut- bzw. Schädlingsdichten zu lokalisieren und die Pflanzenschutzmittel bspw. in deren Ausbringmenge gezielt anzupassen. Durch diese Anpassung kann aber ggf. wiederum ein anderes Spritzprofil notwendig werden, um noch die gewünschte Verteilgenauigkeit zu erreichen. Hierdurch kommt wiederum die vorliegende Erfindung zur Anwendung, wobei wiederum die Spritzprofile bzw. deren Parameter automatisch angepasst werden können.

Die jeweils durch die Spritzprofile eingestellten Parameter werden vorzugsweise in einem Terminal angezeigt bzw. angegeben, so dass ein Maschinenbediener festlegen kann, ob die gewählten Spritzprofile dem gewünschten Arbeitsbereich bzw. der geforderten Verteilqualität entsprechen. Somit kann der Bediener ggf. auch noch weitere bzw. andere Spritzprofile auswählen bzw. definieren.

In einer bevorzugten Ausführungsform können die Spritzprofile bzw. deren Parameter auch derartig gewählt werden, dass diese über die Arbeitsbreite der Verteilvorrichtung variieren können. Dies ist u. a. bei Kurvenfahrten von Bedeutung, wenn bspw. die in der Kurvenbahn außen gelegenen Spritzdüsen eine höhere Ausbringmenge an Pflanzenschutzmittel als die in der Kurvenbahn innengelegenen aufweisen sollen. Hierdurch kann es vorkommen, dass die innengelegenen Spritzdüsen einen kleineren Spritzdruck als die außengelegenen benötigen, wodurch dann wieder aus den Spritzprofilen dasjenige ausgewählt wird, bei dem diese Parameter wiederum weitestgehend mit dem Sollparameter übereinstimmen. Auch wäre hierbei vorstellbar, dass im außen gelegenen Bereich bspw. eine andere Düsenkombination als im innen gelegenen verwendet wird, wodurch auch hierdurch bspw. die Ausbringmenge angepasst werden könnte. Generell können hierbei wiederum die Parameter auf verschiedenste Weise variiert werden.

Nach einer Weiterbildung der Erfindung können die Parameter der Spritzprofile bei einer Kurvenfahrt auf Grundlage von ermittelten Werten von einem Geschwindigkeitssensor oder auch von mehreren Geschwindigkeitssensoren angepasst werden, wobei der Geschwindigkeitssensor oder die mehreren Geschwindigkeitssensoren der Verteilvorrichtung, wahlweise jedoch auch einem Zugfahrzeug zugeordnet sein können.

Vorzugsweise werden zwei Geschwindigkeitssensoren verwendet, die jeweils an den Seitenflügeln der Verteilvorrichtung bzw. des Spritzgestänges vorgesehen sind. Mit dem wenigstens einen Geschwindigkeitssensor bzw. mit den mehreren Geschwindigkeitssensoren kann die Geschwindigkeit der Verteilvorrichtung bzw. des Spritzgestänges ermittelt werden. Auf Grundlage der gemessenen Geschwindigkeit kann die Ausbringmenge an Pflanzenschutzmittel bzw. der Spritzdruck der Spritzdüsen entsprechend angepasst werden. Gleichzeitig kann auch ein entsprechendes Profil von Spritzdüsen definiert bzw. gewählt werden, das in der Rechnereinheit hinterlegt ist. Zur Regulierung der Ausbringmenge bzw. der Spritzdrücke der Spritzdüsen werden die gemessenen Geschwindigkeitswerte an eine Rechnereinheit übertragen, die die ermittelten Werte analysiert und auswertet. In der Praxis hat sich die Detektion von einer Kurvenfahrt als vorteilhaft erwiesen, da so die Ausbringmenge an Pflanzenschutzmittel an das Bewegungsprofil der Verteilmaschine angepasst werden kann. Ein gleichmäßiges Ausbringen von Pflanzenschutzmitteln kann nun auch bei einer Kurvenfahrt gewährleistet werden.

Es kann auch vorgesehen sein, dass die Parameter der Spritzprofile bei einer Kurvenfahrt auf Grundlage von ermittelten Werten von einem Gyroskop oder auch von mehreren Gyroskopen angepasst werden, wobei das Gyroskop oder die mehreren Gyroskope der Verteilvorrichtung oder dem Trägerfahrzeug zugeordnet sind.

In einer bevorzugten Ausführungsform ist der Verteilvorrichtung oder dem Trägerfahrzeug ein Gyroskop zugeordnet. Das Gyroskop kann die bei einer Kurvenfahrt auftretenden Zentrifugalkräfte, die insbesondere auf die Verteilvorrichtung wirken, erfassen, d.h. das Gyroskop misst in vorliegender Ausführungsform jeweils die Beschleunigung der Verteilvorrichtung in Z-Richtung. In der Regel neigt sich die Verteilvorrichtung bei einer Kurvenfahrt nach innen, so dass das Pflanzenschutzmittel ungleichmäßig gespritzt wird. Dieser Nachteil konnte durch die Anordnung eines Gyroskops an das Trägerfahrzeug oder an die Verteilvorrichtung behoben werden. Mittels des Gyroskops kann unterschieden werden, ob eine Geradeausfahrt oder eine Kurvenfahrt des Trägerfahrzeuges mit der gezogenen Verteilvorrichtung erfolgt. Liegt eine Kurvenfahrt vor, so erfasst das Gyroskop die Bewegung und Neigung des Spritzgestänges und leitet die ermittelten Werte an eine Rechnereinheit weiter. Die Rechnereinheit sorgt dafür, dass die Ausbringmenge bzw. die Spritzdrücke in den Spritzdüsen entsprechend der Kurvenfahrt angepasst werden. Gegebenenfalls können auch gleichzeitig Stellgrößen generiert werden, die das Spritzgestänge in einer ruhigen und in einer parallel zur Bodenfläche ausgerichteten Lage halten.

Eine weitere Möglichkeit zur Detektion einer Kurvenfahrt besteht darin, mittels des Gyroskops den Kurvenradius des Fahrzeugs zu berechnen.

Es können somit sowohl Rückschlüsse über den eingeschlagenen Lenkwinkel des Fahrzeuges als auch über die Kurvenstärke und -richtung sowie über den weiteren Kurvenverlauf gezogen werden. Die Detektion der Kurvenfahrt beruht in dieser Ausführungsform darauf, die Beschleunigung des Spritzfahrzeuges bzw. des Spritzgestänges zu erfassen. Je nach Kurvenradius werden die Spritzdrücke der Spritzdüsen auf Grundlage der erfassten Werte an die Fahrtbewegung des Spritzfahrzeuges angepasst.

Zur Lösung der oben genannten Aufgabe schlägt die vorliegende Erfindung zudem ein Verfahren zum Ausbringen von flüssigen und/oder festen Pflanzenschutzmitteln mittels einer Verteilvorrichtung vor, die an einem Rahmen einer Verteilmaschine höhenverstellbar angeordnet und mit einer Mehrzahl an jeweils voneinander beabstandeten Düsenstöcken ausgestattet ist, wobei jeder der Düsenstöcke jeweils wenigstens eine Spritzdüse zum Verteilen des auszubringenden Pflanzenschutzmittels aufweist. Die Ansteuerung der Verteilvorrichtung bzw. die Verteilung der Pflanzenschutzmittel erfolgt auf Basis von wenigstens zwei in einer Rechnereinheit hinterlegten Spritzprofilen, welche jeweils wenigstens zwei Parameter und/oder Sensorwerte umfassen bzw. berücksichtigen. Bei einer Abweichung von wenigstens einem Parameter bzw. Sensorwert eines ersten Spritzprofiles erfolgt erfindungsgemäß eine Umschaltung auf das zweite Spritzprofil, d.h. eine automatisierte Ansteuerung der Verteilvorrichtung auf Grundlage der Parameter des wenigstens einen zweiten Spritzprofiles. Ein solches Spritzprofil kann sich zumindest aus einem Düsenprofil und/oder einem zugeordneten Druckbereich und/oder einer zugeordneten Höhenführung für das Spritzgestänge bzw. für die Verteilvorrichtung zusammensetzen. Die wenigstens zwei Spritzprofile können insbesondere in einer Weise gewählt bzw. konfiguriert sein, dass mit ihnen jeweils eine weitgehend gleiche Verteilqualität auch auf Grundlage jeweils verschiedener Parametern erreicht werden kann.

Ein Düsenprofil kann sich bspw. aus variablen Ansteuerparametern von Spritzdüsen mit unterschiedlichen Eigenschaften und/oder der Ansteuerung von Spritzdüsen mit unterschiedlichen Abständen zusammensetzen. Das Spritzprofil ist sinnvollerweise in der Rechnereinheit hinterlegt, so dass die Rechnereinheit in Abhängigkeit von der Differenz eines Ist-Druckbereichs zu einem Soll-Druckbereich ermitteln kann, welches Spritzprofil aktuell an der Verteilvorrichtung verwendet wird. Außerdem kann dadurch die Rechnereinheit eine automatisierte Ansteuerung auf ein anderes Spritzprofil und dessen Düsenprofil und/oder dessen Höhenführung in einer Weise durchführen, dass der Ist-Druckbereich annähernd dem Soll-Druckbereich entspricht. Der Druckbereich kann insbesondere von der Fahrgeschwindigkeit und/oder der gewünschten bzw. angestrebten Ausbringmenge an Pflanzenschutzmittel beeinflusst werden.

Weiterhin kann das erfindungsgemäße Verfahren vorsehen, dass die Rechnereinheit eine automatisierte Ansteuerung der Verteilvorrichtung auf wenigstens eines der wenigstens zwei vorhandenen Spritzprofile derart durchführt, dass die Parameter den an der Verteilvorrichtung tatsächlich vorhandenen Parametern bzw. Sensorwerten am nächsten kommen und die gewünschte Verteilqualität mittels dieser Parameter erreicht oder zumindest annähernd erreicht wird, wobei hierzu in der Rechnereinheit vorzugsweise ein Istwert-Sollwert-Vergleich durchgeführt werden kann. Um die gewünschten Steuer- und Betriebsparameter für die Rechnereinheit zu erhalten, sind an der Verteilvorrichtung und/oder der Verteilmaschine jeweils Sensoren vorhanden, die der Erfassung der Ist-Werte der Parameter dienen. Somit können die Ist-Werte der vorhandenen Parameter mittels der Rechnereinheit mit den Soll-Werten der Parameter des ausgewählten Spritzprofiles verglichen werden. Durch Ermittlung einer Abweichung der Parameter des ausgewählten Spritzprofiles mittels der Rechnereinheit kann ein jeweils anders Spritzprofil ausgewählt werden, wobei auch die Parameter dieses Spritzprofils automatisch angepasst werden.

Die Umschaltintensitäten zwischen den Parametern der Spritzprofile sind neben zahlreichen anderen Vorgabewerten ebenfalls in der Rechnereinheit hinterlegt. Die Spritzprofile können bspw. auf Basis von kleinräumigen Heterogenitäten, welche mittels Informations- und Gerätesteuerungstechnik ermittelt werden, angesteuert und/oder variiert werden. Außerdem kann in der Rechnereinheit eine Strategie hinterlegt sein, welche während des Umschaltpunktes zwischen den Spritzprofilen regelungsbedingte Druck- und/oder Mengenschwankungen begrenzt. Weiterhin kann es sinnvoll sein, die Parameter der Spritzprofile von einer Bedienperson definieren zu lassen und/oder von einer Datenbank abzurufen. Eine weitere sinnvolle Option kann darin bestehen, die Spritzprofile derartig zu definieren, dass deren Parameter über die Arbeitsbreite der Verteilvorrichtung variieren können.

Das Verfahren kann gemäß einer weiteren sinnvollen Ausführungsvariante vorsehen, dass die Parameter der Spritzprofile bei einer Kurvenfahrt auf Grundlage von ermittelten Werten von ein oder mehreren Geschwindigkeitssensoren angepasst werden. Dieser Geschwindigkeitssensor oder die mehreren Geschwindigkeitssensoren können wahlweise der Verteilvorrichtung und/oder deren Verteilgestänge zugeordnet sein. Darüber hinaus kann es sinnvoll sein, die Parameter der Spritzprofile bei einer Kurvenfahrt auf Grundlage von ermittelten Werten von einem Gyroskop oder von mehreren Gyroskopen anzupassen, wobei das Gyroskop oder die Gyroskope der Verteilvorrichtung bzw. deren Verteilgestänge und/oder einem Zugfahrzeug zugeordnet sein können.

Es sei noch darauf hingewiesen, dass mit den gewählten bzw. verwendeten Spritzprofilen eine weitestgehend gleiche Verteilqualität mit unterschiedlichen Parametern erreicht werden kann, d.h. die Spritzprofile werden derartig angesteuert, dass bei Abweichung eines Parameters eine Umsteuerung der Verteilvorrichtung auf die Parameter eines anderen Spritzprofiles derartig erfolgt, dass die Verteilqualität zumindest weitestgehend konstant bleibt.

Es sei abschließend noch erwähnt, dass eine Abweichung eines Parameters des Spritzprofiles nur eine Ansteuerung eines anderen Spritzprofils hervorruft, insofern deren Parametern den tatsächlich vorhandenen entspricht und mittels dieser auch die gewünschte Verteilqualität erreicht wird. Das bedeutet, dass jeweils dasjenige Spritzprofil gewählt wird, bei welchem die Parameter den aktuellen an der Verteilvorrichtung vorhandenen Werten am weitestgehend nächsten kommen und die Verteilqualität mit der gewünschten zumindest weitestgehend übereinstimmt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht einer Ausführungsvariante einer selbstfahrenden landwirtschaftlichen Maschine bzw. Verteilmaschine mit einer daran angeordneten Verteilvorrichtung.
Fig. 2 zeigt in einem schematischen Blockschaltbild die Regelung bzw. die Komponenten der Steuerung der Verteilvorrichtung.
Fig. 3 zeigt in einer Draufsicht ein Ausführungsbeispiel eines Abschnittes der Verteilvorrichtung mit daran angeordneten Düsenstöcken bzw. Spritzdüsen.

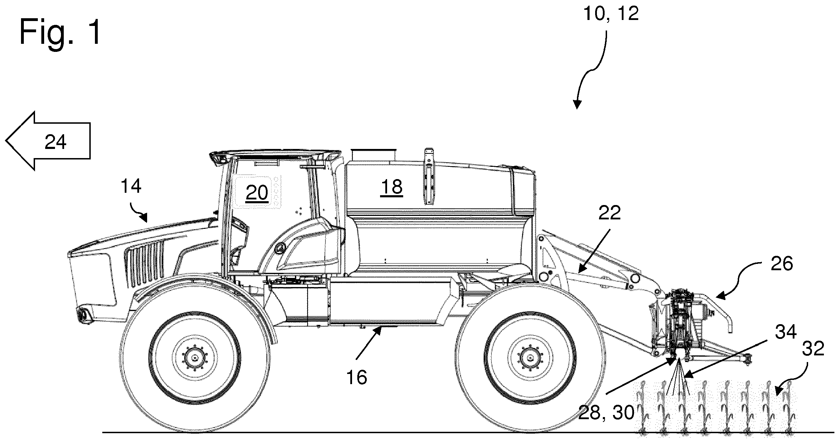

Für gleiche oder gleich wirkende Elemente der Erfindung werden in den Figuren 1 bis 3 identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Verteilmaschine ausgestaltet sein kann und stellen keine abschließende Begrenzung dar.

Die schematische Seitenansicht der Fig. 1 zeigt eine Ausführungsvariante einer selbstfahrenden landwirtschaftlichen Verteilmaschine 10, die auch als sog. Feldspritze 12 zum Ausbringen von flüssigen Pflanzenschutz- und/oder Düngemittel bezeichnet werden kann. Die Feldspritze 12 ist als selbstfahrende Maschine ausgebildet. Die Feldspritze 12 umfasst gemäß Fig. 1 ein Trägerfahrzeug 14 mit eigenem Antrieb und einen Rahmen 16 zum Tragen der einzelnen Baugruppen, einen Vorratsbehälter 18 zum Mitführen der auszubringenden Pflanzenschutzmittel, eine Rechnereinheit 20 zum Steuern der einzelnen Maschinenelemente und ihrer Parameter sowie eine gegenüber dem Rahmen 16 mittels heckseitig am Trägerfahrzeug 14 angeordneten Stellelementen 22 höhenverstellbaren und sich quer zur Fahrrichtung 24 erstreckenden Verteilvorrichtung bzw. Spritzgestänge 26. An der Verteilmaschine 10 bzw. an deren Verteilvorrichtung 26 sind in Abständen von bspw. fünfundzwanzig Zentimeter oder fünfzig Zentimeter zueinander mehrere Düsenstöcke 28 angebracht. An diesen ist/sind wiederum jeweils wenigstens eine Spritzdüse 30, in der Regel jedoch mehrere Spritzdüsen 30, zum gleichmäßigen Verteilen der Pflanzenschutz- und/oder Düngerflüssigkeit montiert. Die Spritzdüsen 30 erzeugen hierzu einen zum Pflanzenbestand 32 hin gerichteten Sprühkegel 34.

Weiter sind der Verteilvorrichtung 10 bzw. dem Spritzgestänge 26 zwei Geschwindigkeitssensoren (nicht dargestellt) zugeordnet. Die Geschwindigkeitssensoren sind vorzugweise jeweils an den Seitenflügeln der Verteilvorrichtung 10 bzw. des Spritzgestänges 26 vorgesehen. Dem Trägerfahrzeug 14 oder der Verteilvorrichtung 10 bzw. dem Spritgestänge 26 kann auch ein Gyroskop (hier nicht dargestellt) zugeordnet sein. Die Geschwindigkeitssensoren und/oder die Gyroskope dienen dazu, eine Kurvenfahrt zu identifizieren, so dass die Ausbringmenge bzw. die Spritzdrücke 48 der Spritzdüsen 30 entsprechend der Fahrtbewegung des Trägerfahrzeuges 14 reguliert werden.

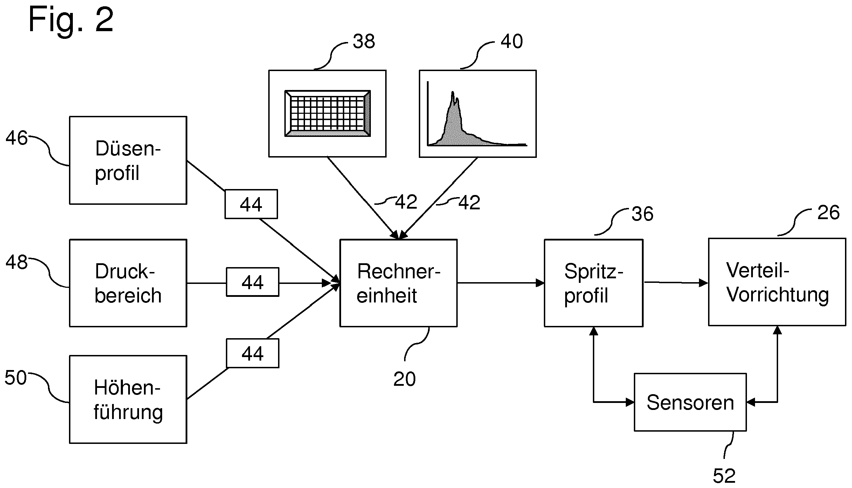

Die Geschwindigkeitssensoren messen dabei jeweils die auftretenden Geschwindigkeiten der Verteileinrichtung 26 bei einer Kurvenfahrt und übermitteln die Werte an eine Rechnereinheit. Diese wertet die übertragenen Werte aus und steuert die Ausbringmenge an Pflanzenschutzmittel bzw. die Spritzdrücke 48 der Spritzdüsen 30. In Abhängigkeit davon kann jeweils ein entsprechendes Spritzprofil aufgerufen werden, das in der Rechnereinheit hinterlegt ist (vgl. Fig. 2).

In einer weiteren Ausführungsform, bei welcher ein Gyroskop vorgesehen ist, wird hingegen die Beschleunigung der Verteilvorrichtung 26 bzw. des Trägerfahrzeuges 14 erfasst. In dieser Ausführungsform können die auftretenden Zentrifugalkräfte bei einer Kurvenfahrt, die insbesondere auf die Verteilvorrichtung 26 wirken, erfasst werden. Das Gyroskop misst dabei jeweils die Beschleunigung der Verteilvorrichtung 26 in Z-Richtung bzw. in Richtung einer Hochachse.

Alternativ können mittels des Gyroskops Rückschlüsse über den eingeschlagenen Lenkwinkel des Trägerfahrzeuges 14 als auch über die Kurvenstärke und -richtung sowie über den weiteren Kurvenverlauf gezogen werden. Hier dient das Gyroskop dazu, den Kurvenradius des Trägerfahrzeuges 14 zu berechnen. Je nach Kurvenradius werden die Spritzdrücke 48 der Spritzdüsen 30 auf Grundlage der erfassten Werte an die Fahrtbewegung des Trägerfahrzeuges 14 angepasst.

Bei den genannten Varianten zur Detektion einer Kurvenfahrt werden die gemessenen Werte an eine Rechnereinheit übertragen. Die Rechnereinheit sorgt anschließend dafür, dass die Ausbringmenge bzw. die Spritzdrücke 48 in den Spritzdüsen 30 entsprechend der Kurvenfahrt angepasst werden. Gegebenenfalls können auch gleichzeitig Stellgrößen generiert werden, die die Verteilvorrichtung 26 in seiner parallel zur Bodenfläche ausgerichteten Lage halten.

Das Blockschaltbild der Fig. 2 zeigt die Regelung bzw. die Komponenten der Steuerung der Verteilvorrichtung 26 sowie die Eingabe der jeweiligen Spritzprofile 36 zum Ausbringen der Pflanzenschutzmittel. Die Spritzprofile 36 werden in einer Rechnereinheit 20 hinterlegt. Dies kann bspw. durch Eingabe mittels eines Terminals 38 oder aber auch durch Einlesen von Kennfeldern 40 oder Daten aus einer Datenbank oder auch aus einer Kombination aus Einlesen und Eingabe erfolgen. Mit dem Terminal 38 oder mit den Kennfeldern 40 können Steuersignale 42 generiert werden, die durch Verarbeitung in der Rechnereinheit 20 vorgeben, welche Spritzprofile 36 benötigt werden.

Das Spritzprofil 36 wird von mehreren Parametern 44 definiert bzw. ist von diesen abhängig, welche an der Verteilvorrichtung 26 und/oder der Verteilmaschine 10 mittels der Rechnereinheit 20 verarbeitet bzw. variiert werden können.

Ein erster Parameter sieht zunächst verschiedene Düsenprofile 46 bzw. eine definierte Ansteuerung der Spritzdüsen 30 bzw. der Düsenstöcke 28 vor. So ist es, bspw. für einen Bediener, möglich jeweils verschiedene Profile von Spritzdüsen 30 zu definieren, bei denen die Abstände einzelner Düsen zueinander variieren könnten, wobei diese Abstände vorzugsweise fünfundzwanzig Zentimeter und/oder fünfzig Zentimeter betragen. Beeinflusst wird dies u.a. vom Spritzdüsentyp. Dieser wird vorzugsweise auf Basis der jeweils erforderlichen Zerstäubungscharakteristik (fein-, mittel- oder grobtropfig) ausgewählt. Weiter werden u. a. die Winkel der einzelnen Sprühkegel 34 beeinflusst.

Ein weiterer Parameter legt einen Druckbereich 48 bzw. einen Spritzdruck 48 im Versorgungssystem der Verteilvorrichtung 26 fest, d.h. mit welchem Druck die Versorgungssysteme bzw. die Spritzdüsen 30 beaufschlagt werden. Dieser Druckbereich 48 kann bspw. zwei bis fünf bar betragen. Der Druckbereich 48 wird während des Ausbringvorganges von verschiedenen Faktoren beeinflusst, bspw. von der Ausbringmenge an Pflanzenschutzmittel, wobei diese wiederum u. a. von der Fahrgeschwindigkeit der Verteilvorrichtung abhängt. Dies bedeutet, dass durch eine Änderung der Fahrgeschwindigkeit eine Veränderung an Ausbringmenge an Pflanzenschutzmittel erforderlich wird, was wiederum eine Änderung des Spritzdrucks 48 zur Folge hat.

Wiederum bestimmt ein weiterer Parameter die Höhenführung 50 bzw. den Arbeitsabstand den die Verteilvorrichtung 26 während des Ausbringvorganges zum Pflanzenbestand 32 aufweist. Diese Höhenführung 50 wird mit einem Stellelement 22, welches zwischen dem Rahmen 16 des Trägerfahrzeuges 14 und der Verteilvorrichtung 26 angeordnet ist, variabel verstellt (vgl. Fig. 1). Als Stellelemente 22 für die Höhenführung der Verteilvorrichtung 26 können unterschiedliche Stellglieder eingesetzt werden. Vorzugsweise können hierfür hydraulisch arbeitende Zylinder Verwendung finden. Es sind aber auch pneumatische, elektrische oder andere Stellglieder sinnvoll einzusetzen.

Durch Variation dieser vorzugsweise drei genannten Parameter 44 werden in der Rechnereinheit 20 diverse verschiedene Spritzprofile 36 zum Ausbringen der Pflanzenschutzmittel erzeugt.

Eine automatisierte Ansteuerung der Verteilvorrichtung 26 könnte gemäß der vorliegenden Erfindung wie folgt durchgeführt werden. Zunächst werden in einer Rechnereinheit 20 verschiedene Düsenprofile 46 hinterlegt, d.h. es wird definiert ob bspw. eine oder mehrere Spritzdüsen 30 in einem Abstand von bspw. 25cm oder 50cm miteinander angesteuert werden.

Jedem Düsenprofil 46 werden ein Druckbereich 48 sowie eine Höhenführung 50 der Verteilvorrichtung 26 zugeordnet, d.h. es wird definiert, mit welchem Spritzdruck 48 die jeweiligen Düsenprofile 46 beaufschlagt werden dürfen sowie in welchem Abstand bzw. in welcher Höhe die Verteilvorrichtung 26 über dem Pflanzenbestand bzw. der Bodenoberfläche geführt werden soll.

Zu Beginn des Ausbringvorganges kann bspw. ein Bediener bzw. ein Fahrzeugführer aus der Vielzahl der Spritzprofile 36 diejenigen auswählen mittels denen die für das jeweilig auszubringende Pflanzenschutzmittel benötigte Verteilgenauigkeit erreicht werden kann. Es wäre jedoch auch vorstellbar, dass bspw. durch Eingabe in der Rechnereinheit 20 des auszubringenden Pflanzenschutzmittels eine automatische Vorauswahl der Spritzprofile 36 durch die Rechnereinheit 20 erfolgt.

Anschließend erfolgt dann der Beginn des Ausbringvorganges, wobei hierzu ein erstes Spritzprofil 36 mit dessen dazugehörigen Düsenprofil 46 sowie dessen dazugehörigen Spritzdruck 48 und dessen Höhenführung 50 ausgewählt bzw. die Verteilvorrichtung 26 entsprechend angesteuert wird.

Wird nun bspw. die Fahrgeschwindigkeit erhöht oder verringert, wodurch sich dann die Ausbringmenge ebenso erhöht oder verringert und ggf. der vorgegebene Spritzdruck 48 unter- bzw. überschritten wird, kann dies bedeuten, dass die gewünschte Benetzung nicht mehr erreicht werden kann und ein anderes Spritzprofil 36 nötig wäre, um diese zu erreichen. Ist dies der Fall, erfolgt durch die Rechnereinheit 20 eine automatisierte Ansteuerung eines anderen, i d. R. vorher ausgewählten, Spritzprofils 36, mittels dem die gewünschte Verteilgenauigkeit mit den aktuell an der Verteilvorrichtung vorhandenen Parametern zumindest weitestgehend erreicht wird, bei dem jedoch die Parameter 36 anders definiert sind. Das bedeutet, dass in der Verteilvorrichtung 26 ein anderes Düsenprofil 46 oder eine andere Höhenführung 50 derartig angesteuert wird, so dass die gewünschte Benetzung mit einem höheren oder geringeren Spritzdruck 48 ebenso erreicht wird.

Um während des Ausbringvorganges die an der Verteilvorrichtung 26 vorhandenen Parameter 44 zu ermitteln, sind an dieser bzw. der Feldspritze 12 diverse Sensoren 52 bzw. Messmittel vorhanden. Mittels dieser können u. a. die Höhenführung 50, der Spritzdruck 48, die Fahrgeschwindigkeit oder die Ausbringmenge bestimmt werden. Diese Werte werden anschließend in einem Istwert - Sollwert Vergleich mit den in der Rechnereinheit 20 hinterlegten und für das jeweilige Spritzprofil 36 benötigten Werte verglichen. Bei entsprechenden Abweichungen erfolgt dann wiederum das erfindungsgemäße Umsteuern der Verteilvorrichtung 26 auf ein anderes Spritzprofil 36.

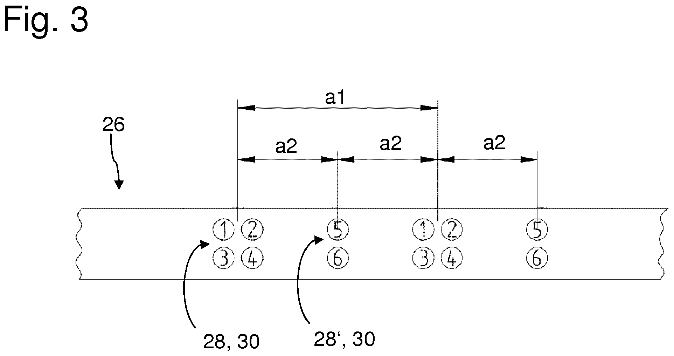

Fig. 3 zeigt in einer Draufsicht ein Ausführungsbeispiel eines Abschnittes der Verteilvorrichtung 26 mit daran angeordneten Düsenstöcken 28, 28' bzw. Spritzdüsen 30. Hierbei werden insgesamt vier Düsenstöcke dargestellt. Wobei jeweils zwei sog. Vierfach-28 und ein sog. Zweifachdüsenstock 28` abgebildet sind, welche jeweils in einem Abstand a1 oder a2 zueinander angebracht sind. Die Abstände hierbei betragen in der Regel für a1 50cm und für a2 25 cm, wobei es durchaus auch vorstellbar wäre, dass diese Abstände anders gewählt werden. Die Spritzdüsen werden jeweils von 1 bis 6 nummeriert. Eine Auswahl von Düsenkombinationen kann nun bspw. die Spritzdüsen 1 + 5 kombinieren oder die Spritzdüsen 4 + 6 etc. Oder es könnten auch nur die Spritzdüsen 1 geschaltet werden, wobei diese Düsenprofile 46 je nach gewünschter Verteilgenauigkeit beliebig definiert und in der Rechnereinheit 20 hinterlegt werden können. Darüber hinaus kann jedem Düsenprofil 46 eine Druckbereich 48 und/oder eine Höhenführung 50 zugeordnet werden und somit von bspw. von einem Bediener verschiedenste Spritzprofile 36 definiert werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Verteilmaschine, Verteilvorrichtung
12 Feldspritze
14 Trägerfahrzeug
16 Rahmen
18 Vorratsbehälter
20 Rechnereinheit
22 Stellelement
24 Fahrtrichtung
26 Verteilvorrichtung
28, 28` Düsenstock
30 Spritzdüse
32 Pflanzenbestand; Bodenoberfläche
34 Sprühkegel
36 Spritzprofil
38 Terminal
40 Kennfelder
42 Steuersignale
44 Parameter
46 Düsenprofil
48 Druckbereich, Spritzdruck, Ist-Druckbereich, Soll-Druckbereich
50 Höhenführung
52 Sensoren

## Patentansprüche

1. Landwirtschaftliche Verteilmaschine (10) zum Ausbringen von flüssigen und/oder festen Pflanzenschutzmitteln mittels einer Verteilvorrichtung (26), die an einem Rahmen (16) der Verteilmaschine (10) höhenverstellbar angeordnet ist und mit einer Mehrzahl an jeweils voneinander beabstandeten Düsenstöcken (28, 28') ausgestattet ist, wobei jeder der Düsenstöcke (28, 28') jeweils wenigstens eine Spritzdüse (30) zum Verteilen des auszubringenden Pflanzenschutzmittels aufweist,
**dadurch gekennzeichnet, dass** die Ansteuerung der Verteilvorrichtung (26) bzw. die Verteilung der Pflanzenschutzmittel auf Basis von wenigstens zwei in einer Rechnereinheit (20) hinterlegten Spritzprofilen (36) erfolgt, welche jeweils wenigstens drei Parameter (44) und/oder Sensorwerte umfassen bzw. berücksichtigen, wobei sich ein Spritzprofil (36) zumindest aus einem Düsenprofil (46) und einem zugeordneten Druckbereich (48) und einer zugeordneten Höhenführung (50) zusammensetzt, und wobei bei einer Abweichung von wenigstens einem Parameter (44) bzw. Sensorwert eines ersten Spritzprofiles (36) eine automatisierte Ansteuerung der Verteilvorrichtung (36) auf Grundlage der Parameter (44) des wenigstens einen zweiten, anderen, vorher ausgewählten Spritzprofiles (36) erfolgt, bei dem die Parameter anders definiert sind.

2. Landwirtschaftliche Verteilmaschine nach Anspruch 1, bei der sich ein Düsenprofil (46) aus der Ansteuerung von Spritzdüsen (30) mit unterschiedlichen Eigenschaften und/oder der Ansteuerung von Spritzdüsen (30) mit unterschiedlichen Abständen zusammensetzt.

3. Landwirtschaftliche Verteilmaschine nach einem der Ansprüche 1 bis 2, bei der das Spritzprofil (36) in der Rechnereinheit (20) hinterlegt ist und die Rechnereinheit (20) in Abhängigkeit von der Differenz eines Ist-Druckbereichs (48) zu einem Soll-Druckbereich (48) ermittelt, welches Spritzprofil (36) aktuell an der Verteilvorrichtung (26) verwendet wird und eine automatisierte Ansteuerung auf ein anderes Spritzprofil (36) und dessen Düsenprofil (46) und/oder dessen Höhenführung (50) derart durchführt, dass der Ist-Druckbereich (48) annähernd dem Soll-Druckbereich (48) entspricht.

4. Landwirtschaftliche Verteilmaschine nach Anspruch 3, bei der an der Verteilvorrichtung (26) und/oder der Verteilmaschine (10) jeweils Sensoren (52) zur Erfassung der Ist-Werte der Parameter (44) angebracht sind, wobei die Ist-Werte der vorhandenen Parameter (44) mittels der Rechnereinheit (20) mit den Soll-Werten der Parameter (44) des ausgewählten Spritzprofiles (36) verglichen werden.

5. Landwirtschaftliche Verteilmaschine nach Anspruch 3 oder 4, bei der die Umschaltintensitäten zwischen den Parametern (44) der Spritzprofile (36) in der Rechnereinheit (20) hinterlegt sind.

6. Landwirtschaftliche Verteilmaschine nach einem der Ansprüche 3 bis 5, bei der in der Rechnereinheit (20) eine Strategie hinterlegt ist, welche während des Umschaltpunktes zwischen den Spritzprofilen (36) regelungsbedingte Druck- und/oder Mengenschwankungen begrenzt.

7. Landwirtschaftliche Verteilmaschine nach einem der Ansprüche 1 bis 6, bei der die Spritzprofile (36) derartig definiert sind, dass deren Parameter (44) über die Arbeitsbreite der Verteilvorrichtung (26) variabel bzw. variierbar sind.

8. Landwirtschaftliche Verteilmaschine nach einem der Ansprüche 1 bis 7, bei der die Parameter (44) der Spritzprofile (36) bei einer Kurvenfahrt auf Grundlage von ermittelten Werten von ein oder mehreren Geschwindigkeitssensoren anpassbar sind, wobei die ein oder mehreren Geschwindigkeitssensoren der Verteilvorrichtung (26) bzw. deren Verteilgestänge zugeordnet sind.

9. Landwirtschaftliche Verteilmaschine nach einem der Ansprüche 1 bis 8, bei der die Parameter (44) der Spritzprofile (36) bei einer Kurvenfahrt auf Grundlage von ermittelten Werten von einem oder mehreren Gyroskopen anpassbar sind, wobei die ein oder mehreren Gyroskope der Verteilvorrichtung (26) bzw. deren Verteilgestänge und/oder einem Zugfahrzeug zugeordnet sind.

10. Verfahren zum Ausbringen von flüssigen und/oder festen Pflanzenschutzmitteln mittels einer Verteilvorrichtung (26), die an einem Rahmen (16) einer Verteilmaschine (10) höhenverstellbar angeordnet ist und mit einer Mehrzahl an jeweils voneinander beabstandeten Düsenstöcken (28, 28') ausgestattet ist, wobei jeder der Düsenstöcke (28, 28') jeweils wenigstens eine Spritzdüse (30) zum Verteilen des auszubringenden Pflanzenschutzmittels aufweist,
**dadurch gekennzeichnet, dass** die Ansteuerung der Verteilvorrichtung (26) bzw. die Verteilung der Pflanzenschutzmittel auf Basis von wenigstens zwei in einer Rechnereinheit (20) hinterlegten Spritzprofilen (36) erfolgt, welche jeweils wenigstens drei Parameter (44) und/oder Sensorwerte umfassen bzw. berücksichtigen, wobei sich ein Spritzprofil (36) zumindest aus einem Düsenprofil (46) und einem zugeordneten Druckbereich (48) und einer zugeordneten Höhenführung (50) zusammensetzt, und wobei bei einer Abweichung von wenigstens einem Parameter (44) bzw. Sensorwert eines ersten Spritzprofiles (36) eine automatisierte Ansteuerung der Verteilvorrichtung (36) auf Grundlage der Parameter (44) des wenigstens einen zweiten, anderen, vorher ausgewählten Spritzprofiles (36) erfolgt, bei dem die Parameter anders definiert sind.

11. Verfahren nach Anspruch 10, bei dem die wenigstens zwei Spritzprofile (36) derart gewählt bzw. konfiguriert sind, dass mit diesen eine weitgehend gleiche Verteilqualität mit verschiedenen Parametern (44) erreicht wird.

12. Verfahren nach Anspruch 10 oder 11, bei dem sich ein Düsenprofil (46) aus der Ansteuerung von Spritzdüsen (30) mit unterschiedlichen Eigenschaften und/oder der Ansteuerung von Spritzdüsen (30) mit unterschiedlichen Abständen zusammensetzt.

13. Verfahren nach einem der Ansprüche 10 bis 12, bei dem das Spritzprofil (36) in der Rechnereinheit (20) hinterlegt ist und die Rechnereinheit (20) in Abhängigkeit von der Differenz eines Ist-Druckbereichs (48) zu einem Soll-Druckbereich (48) ermittelt, welches Spritzprofil (36) aktuell an der Verteilvorrichtung (26) verwendet wird und eine automatisierte Ansteuerung auf ein anderes Spritzprofil (36) und dessen Düsenprofil (46) und/oder dessen Höhenführung (50) derart durchführt, dass der Ist-Druckbereich (48) annähernd dem Soll-Druckbereich (48) entspricht.

14. Verfahren nach einem der Ansprüche 10 bis 13, bei dem die Rechnereinheit (20) eine automatisierte Ansteuerung der Verteilvorrichtung (26) auf wenigstens eines der wenigstens zwei vorhandenen Spritzprofile (36) derart durchführt, dass die Parameter (44) den an der Verteilvorrichtung (26) tatsächlich vorhandenen Parametern (44) am nächsten kommen und die gewünschte Verteilqualität mittels dieser Parameter (44) erreicht wird, wobei hierzu in der Rechnereinheit (20) ein Istwert-Sollwert-Vergleich durchgeführt werden kann.

15. Verfahren nach einem der Ansprüche 10 bis 14, bei dem der Druckbereich (48) von der Fahrgeschwindigkeit und/oder der Ausbringmenge an Pflanzenschutzmittel beeinflusst wird.

16. Verfahren nach einem der Ansprüche 10 bis 15, bei dem an der Verteilvorrichtung (26) und/oder der Verteilmaschine (10) jeweils Sensoren (52) zur Erfassung der Ist-Werte der Parameter (44) angebracht sind, wobei die Ist-Werte der vorhandenen Parameter (44) mittels der Rechnereinheit (20) mit den Soll-Werten der Parameter (44) des ausgewählten Spritzprofiles (36) verglichen werden.

17. Verfahren nach einem der Ansprüche 10 bis 16, bei dem durch Ermittlung einer Abweichung der Parameter (44) des ausgewählten Spritzprofiles (36) mittels der Rechnereinheit (20) ein jeweils anders Spritzprofil (36) ausgewählt wird, wobei die Parameter (44) dieses Spritzprofils (36) automatisch angepasst werden.

18. Verfahren nach einem der Ansprüche 10 bis 17, bei dem die Umschaltintensitäten zwischen den Parametern (44) der Spritzprofile (36) in der Rechnereinheit (20) hinterlegt sind.

19. Verfahren nach einem der Ansprüche 10 bis 18, bei dem die Spritzprofile (36) auf Basis von kleinräumigen Heterogenitäten, welche mittels Informations- und Gerätesteuerungstechnik ermittelt werden, angesteuert und/oder variiert werden.

20. Verfahren nach einem der Ansprüche 10 bis 19, bei dem in der Rechnereinheit (20) eine Strategie hinterlegt ist, welche während des Umschaltpunktes zwischen den Spritzprofilen (36) regelungsbedingte Druck- und/oder Mengenschwankungen begrenzt.

21. Verfahren nach einem der Ansprüche 10 bis 20, bei dem die Parameter (44) der Spritzprofile (36) von einer Bedienperson definierbar und/oder von einer Datenbank abrufbar sind.

22. Verfahren nach einem der Ansprüche 10 bis 21, bei dem die Spritzprofile (36) derartig definiert werden können, dass deren Parameter (44) über die Arbeitsbreite der Verteilvorrichtung (26) variieren können.

23. Verfahren nach einem der Ansprüche 10 bis 22, bei dem die Parameter (44) der Spritzprofile (36) bei einer Kurvenfahrt auf Grundlage von ermittelten Werten von einem Geschwindigkeitssensor oder von mehreren Geschwindigkeitssensoren angepasst werden, wobei der wenigstens eine Geschwindigkeitssensor der Verteilvorrichtung (26) bzw. deren Verteilgestänge zugeordnet ist.

24. Verfahren nach einem der Ansprüche 10 bis 23, bei dem die Parameter (44) der Spritzprofile (36) bei einer Kurvenfahrt auf Grundlage von ermittelten Werten von einem Gyroskop oder von mehreren Gyroskopen angepasst werden, wobei das wenigstens eine Gyroskop der Verteilvorrichtung (26) bzw. deren Verteilgestänge und/oder einem Zugfahrzeug zugeordnet ist.

## Claims

1. An agricultural distribution machine (10) for spreading liquid and/or solid plant protection products by means of a distribution apparatus (26), which is arranged to be height-adjustable on a frame (16) of the distribution machine (10), and which is equipped with a plurality of nozzle holders (28, 28'), which are in each case spaced apart from each other, wherein each of the nozzle holders (28, 28') in each case has at least one spray nozzle (30) for distributing the plant protection product to be spread, **characterised in that** the activation of the distribution apparatus (26) or the distribution of the plant protection products is carried out based on at least two spray profiles (36) stored in a computer unit (20), which spray profiles (36) each comprise or take into account at least three parameters (44) and/or sensor values, wherein a spray profile (36) is composed of at least a nozzle profile (46) and an associated pressure range (48) and an associated height control (50), and wherein, in the instance of a deviation of at least one parameter (44) or of one sensor value of a first spray profile (36), an automated activation of the distribution apparatus (26) is carried out based on the parameters (44) of the at least one second other, previously selected spray profile (36), in which the parameters are defined differently.

2. The agricultural distribution machine according to claim 1, in which a nozzle profile (46) is composed of the activation of spray nozzles (30) with different characteristics and/or of the activation of spray nozzles (30) that are differently spaced apart from each other.

3. The agricultural distribution machine according to one of the claims 1 to 2, in which the spray profile (36) is stored in the computer unit (20), and the computer unit (20) determines the spray profile (36) currently being used at the distribution apparatus (26) based on the difference between an actual pressure range (48) and a target pressure range (48) and carries out an automated activation on another spray profile (36) and its nozzle profile (46) and/or its height control (50) such that the actual pressure range (48) corresponds approximately to the target pressure range (48).

4. The agricultural distribution machine according to claim 3, in which sensors (52) for the detection of the actual values of the parameters (44) are mounted in each case on the distribution apparatus (26) and/or on the distribution machine (10), wherein the actual values of the present parameters (44) are compared by means of the computer unit (20) to the target values of the parameters (44) of the selected spray profile (36).

5. The agricultural distribution machine according to claim 3 or 4, in which the switching intensities between the parameters (44) of the spray profiles (36) are stored in the computer unit (20).

6. The agricultural distribution machine according to one of the claims 3 to 5, in which a strategy is stored in the computer unit (20) to limit regulation-related pressure fluctuations and/or volume fluctuations during the switching point between the spray profiles (36).

7. The agricultural distribution machine according to one of the claims 1 to 6, in which the spray profiles (36) are defined such that their parameters (44) are variable across the working width of the distribution apparatus (26).

8. The agricultural distribution machine according to one of the claims 1 to 7, in which the parameters (44) of the spray profiles (36) are adaptable when driving along curves based on values determined by one or more speed sensors, wherein the one or more speed sensors are associated with the distribution apparatus (26) or with its distribution boom.

9. The agricultural distribution machine according to one of the claims 1 to 8, in which the parameters (44) of the spray profiles (36) are adaptable when driving along curves based on values determined by one or more gyroscopes, wherein the one or more gyroscopes are associated with the distribution apparatus (26) or with its distribution boom and/or with a towing vehicle.

10. A method for spreading liquid and/or solid plant protection products by means of a distribution apparatus (26), which is arranged to be height-adjustable on a frame (16) of the distribution machine (10), and which is equipped with a plurality of nozzle holders (28, 28'), which are in each case spaced apart from each other, wherein each of the nozzle holders (28, 28') in each case has at least one spray nozzle (30) for distributing the plant protection product to be spread,
**characterised in that** the activation of the distribution apparatus (26) or the distribution of the plant protection products is carried out based on at least two spray profiles (36) stored in a computer unit (20), which spray profiles (36) each comprise or take into account at least three parameters (44) and/or sensor values, wherein a spray profile (36) is composed of at least a nozzle profile (46) and an associated pressure range (48) and an associated height control (50), and wherein, in the instance of a deviation of at least one parameter (44) or of one sensor value of a first spray profile (36), an automated activation of the distribution apparatus (26) is carried out based on the parameters (44) of the at least one second other, previously selected spray profile (36), in which the parameters are defined differently.

11. The method according to claim 10, in which the at least two spray profiles (36) are selected or configured such that a largely same distribution quality is achieved with these spray profiles (36) when using different parameters (44).

12. The method according to claim 10 or 11, in which a nozzle profile (46) is composed of the activation of spray nozzles (30) with different characteristics and/or of the activation of spray nozzles (30) that are differently spaced apart from each other.

13. The method according to one of the claims 10 to 12, in which the spray profile (36) is stored in the computer unit (20), and the computer unit (20) determines the spray profile (36) currently being used at the distribution apparatus (26) based on the difference between an actual pressure range (48) and a target pressure range (48) and carries out an automated activation on another spray profile (36) and its nozzle profile (46) and/or its height control (50) such that the actual pressure range (48) corresponds approximately to the target pressure range (48).

14. The method according to one of the claims 10 to 13, in which the computer unit (20) carries out an automated activation of the distribution apparatus (26) on at least one of the at least two spray profiles (36) present such that the parameters (44) come closest to the parameters (44) actually present at the distribution apparatus (26) and such that the desired distribution quality is achieved by means of these parameters (44), wherein an actual-target value comparison can be carried out for this purpose in the computer unit (20).

15. The method according to one of the claims 10 to 14, in which the pressure range (48) is influenced by the driving speed and/or by the spreading quantity of the plant protection product.

16. The method according to one of the claims 10 to 15, in which sensors (52) for the detection of the actual values of the parameters (44) are mounted in each case on the distribution apparatus (26) and/or on the distribution machine (10), wherein the actual values of the present parameters (44) are compared by means of the computer unit (20) to the target values of the parameters (44) of the selected spray profile (36).

17. The method according to one of the claims 10 to 16, in which a different spray profile (36) is selected in each case by determining a deviation of the parameters (44) of the selected spray profile (36) by means of the computer unit (20), wherein the parameters (44) of this spray profile (36) are automatically adapted.

18. The method according to one of the claims 10 to 17, in which the switching intensities between the parameters (44) of the spray profiles (36) are stored in the computer unit (20).

19. The method according to one of the claims 10 to 18, in which the spray profiles (36) are activated and/or varied based on small-scale heterogeneities, which are determined by means of information technology and device control technology.

20. The method according to one of the claims 10 to 19, in which a strategy is stored in the computer unit (20) to limit regulation-related pressure fluctuations and/or volume fluctuations during the switching point between the spray profiles (36).

21. The method according to one of the claims 10 to 20, in which the parameters (44) of the spray profiles (36) are definable by an operator and/or accessible from a database.

22. The method according to one of the claims 10 to 21, in which the spray profiles (36) are defined such that their parameters (44) can vary across the working width of the distribution apparatus (26).

23. The method according to one of the claims 10 to 22, in which the parameters (44) of the spray profiles (36) are adapted when driving along curves based on values determined by one speed sensor or by a plurality of speed sensors, wherein the at least one speed sensor is associated with the distribution apparatus (26) or with its distribution boom.

24. The method according to one of the claims 10 to 23, in which the parameters (44) of the spray profiles (36) are adapted when driving along curves based on values determined by one gyroscope or by a plurality of gyroscopes, wherein the at least one gyroscope is associated with the distribution apparatus (26) or with its distribution boom and/or with a towing vehicle.

## Revendications

1. Machine agricole de distribution (10) destinée à épandre des produits phytosanitaires liquides et/ou solides au moyen d'un dispositif de distribution (26) qui est agencé sur un châssis (16) de la machine de distribution (10) de manière à pouvoir être réglé en hauteur et est équipé d'une pluralité de porte-buses (28, 28') espacés chacun les uns des autres, dans lequel chacun des porte-buses (28, 28') comprend respectivement au moins une buse de pulvérisation (30) pour distribuer le produit phytosanitaire à épandre,
**caractérisée par le fait que** la commande du dispositif de distribution (26) ou bien la distribution des produits phytosanitaires se fait sur la base d'au moins deux profils de pulvérisation (36) qui sont mémorisés dans une unité informatique (20) et qui comprennent chacun au moins trois paramètres (44) et/ou valeurs de capteur ou bien prennent en compte ceux-ci, dans lequel un profil de pulvérisation (36) est composé d'au moins un profil de buse (46) et d'une plage de pression (48) associée et d'un guide de hauteur (50) associé, et dans lequel, dans le cas d'un écart d'au moins un paramètre (44) ou bien d'une valeur de capteur d'un premier profil de pulvérisation (36), le dispositif de distribution (26) est commandé de façon automatisée sur la base des paramètres (44) dudit au moins un deuxième profil de pulvérisation (36) différent et précédemment sélectionné, dans lequel les paramètres sont définis différemment.

2. Machine agricole de distribution selon la revendication 1, dans laquelle un profil de buses (46) est composé de la commande de buses de pulvérisation (30) ayant des propriétés différentes et/ou de la commande de buses de pulvérisation (30) ayant des distances différentes.

3. Machine agricole de distribution selon l'une quelconque des revendications 1 à 2, dans laquelle le profil de pulvérisation (36) est mémorisé dans l'unité informatique (20), et l'unité informatique (20) détermine en fonction de la différence entre une plage de pression réelle (48) et une plage de pression cible (48) quel profil de pulvérisation (36) est utilisé actuellement sur le dispositif de distribution (26) et commande de façon automatisée un autre profil de pulvérisation (36) et son profil de buses (46) et/ou son guide de hauteur (50) de telle sorte que la plage de pression réelle (48) corresponde approximativement à la plage de pression cible (48).

4. Machine agricole de distribution selon la revendication 3, dans laquelle des capteurs (52) destinés à détecter les valeurs réelles des paramètres (44) sont montés respectivement sur le dispositif de distribution (26) et/ou la machine de distribution (10), dans laquelle les valeurs réelles des paramètres (44) existants sont comparées au moyen de l'unité informatique (20) aux valeurs de consigne des paramètres (44) du profil de pulvérisation (36) sélectionné.

5. Machine agricole de distribution selon la revendication 3 ou 4, dans laquelle les intensités de commutation entre les paramètres (44) des profils de pulvérisation (36) sont mémorisées dans l'unité informatique (20).

6. Machine agricole de distribution selon l'une quelconque des revendications 3 à 5, dans laquelle une stratégie est mémorisée dans l'unité informatique (20), qui limite, lors du point de commutation entre les profils de pulvérisation (36), des fluctuations de pression et/ou de quantité dues à la régulation.

7. Machine agricole de distribution selon l'une quelconque des revendications 1 à 6, dans laquelle les profils de pulvérisation (36) sont définis de telle sorte que leurs paramètres (44) sont variables ou bien peuvent être variés sur la largeur de travail du dispositif de distribution (26).

8. Machine agricole de distribution selon l'une quelconque des revendications 1 à 7, dans laquelle les paramètres (44) des profils de pulvérisation (36) sont adaptables en virage sur la base de valeurs déterminées par un ou plusieurs capteurs de vitesse, dans laquelle ledit un ou lesdits plusieurs capteur(s) de vitesse sont associés au dispositif de distribution (26) ou bien aux tringles de distribution de celui-ci.

9. Machine agricole de distribution selon l'une quelconque des revendications 1 à 8, dans laquelle les paramètres (44) des profils de pulvérisation (36) sont adaptables en virage sur la base de valeurs déterminées par un ou plusieurs gyroscopes, dans laquelle ledit un ou lesdits plusieurs gyroscope(s) sont associé au dispositif de distribution (26) ou bien aux tringles de distribution de celui-ci et/ou à un véhicule tracteur.

10. Procédé d'épandage de produits phytosanitaires liquides et/ou solides au moyen d'un dispositif de distribution (26) qui est agencé sur un châssis (16) d'une machine de distribution (10) de manière à pouvoir être réglé en hauteur et est équipé d'une pluralité de porte-buses (28, 28') espacés chacun les uns des autres, dans lequel chacun des porte-buses (28, 28') comprend respectivement au moins une buse de pulvérisation (30) pour distribuer le produit phytosanitaire à épandre,
**caractérisé par le fait que** la commande du dispositif de distribution (26) ou bien la distribution des produits phytosanitaires se fait sur la base d'au moins deux profils de pulvérisation (36) qui sont mémorisés dans une unité informatique (20) et qui comprennent chacun au moins trois paramètres (44) et/ou valeurs de capteur ou bien prennent en compte ceux-ci, dans lequel un profil de pulvérisation (36) est composé d'au moins un profil de buse (46) et d'une plage de pression (48) associée et d'un guide de hauteur (50) associé, et dans lequel, dans le cas d'un écart d'au moins un paramètre (44) ou bien d'une valeur de capteur d'un premier profil de pulvérisation (36), le dispositif de distribution (26) est commandé de façon automatisée sur la base des paramètres (44) dudit au moins un deuxième profil de pulvérisation (36) différent et précédemment sélectionné, dans lequel les paramètres sont définis différemment.

11. Procédé selon la revendication 10, dans lequel lesdits au moins deux profils de pulvérisation (36) sont sélectionnés ou bien configurés de manière à obtenir avec eux une qualité de distribution dans une large mesure identique avec des paramètres (44) différents.

12. Procédé selon la revendication 10 ou 11, dans lequel un profil de buses (46) est composé de la commande de buses de pulvérisation (30) ayant des propriétés différentes et/ou de la commande de buses de pulvérisation (30) ayant des distances différentes.

13. Procédé selon l'une quelconque des revendications 10 à 12, dans lequel le profil de pulvérisation (36) est mémorisé dans l'unité informatique (20), et l'unité informatique (20) détermine en fonction de la différence entre une plage de pression réelle (48) et une plage de pression cible (48) quel profil de pulvérisation (36) est utilisé actuellement sur le dispositif de distribution (26) et commande de façon automatisée un autre profil de pulvérisation (36) et son profil de buses (46) et/ou son guide de hauteur (50) de telle sorte que la plage de pression réelle (48) corresponde approximativement à la plage de pression cible (48).

14. Procédé selon l'une quelconque des revendications 10 à 13, dans lequel l'unité informatique (20) effectue une commande automatisée du dispositif de distribution (26) sur au moins l'un desdits au moins deux profils de pulvérisation (36) présents de telle manière que les paramètres (44) sont le plus proche des paramètres (44) réellement présents sur le dispositif de distribution (26) et que la qualité de distribution souhaitée est obtenue au moyen de ces paramètres (44), dans lequel, pour cela, une comparaison valeur réelle/valeur de consigne peut être effectuée dans l'unité informatique (20).

15. Procédé selon l'une quelconque des revendications 10 à 14, dans lequel la plage de pression (48) est influencée par la vitesse de déplacement et/ou la quantité d'épandage de produit phytosanitaire.

16. Procédé selon l'une quelconque des revendications 10 à 15, dans lequel des capteurs (52) de détection des valeurs réelles des paramètres (44) sont montés respectivement sur le dispositif de distribution (26) et/ou la machine de distribution (10), dans lequel les valeurs réelles des paramètres (44) existants sont comparées au moyen de l'unité informatique (20) aux valeurs de consigne des paramètres (44) du profil de pulvérisation (36) sélectionné.

17. Procédé selon l'une quelconque des revendications 10 à 16, dans lequel un profil de pulvérisation (36) respectivement différent est sélectionné en déterminant un écart des paramètres (44) du profil de pulvérisation sélectionné (36) au moyen de l'unité informatique (20), dans lequel les paramètres (44) de ce profil de pulvérisation (36) sont adaptés automatiquement.

18. Procédé selon l'une quelconque des revendications 10 à 17, dans lequel les intensités de commutation entre les paramètres (44) des profils de pulvérisation (36) sont mémorisées dans l'unité informatique (20).

19. Procédé selon l'une quelconque des revendications 10 à 18, dans lequel les profils de pulvérisation (36) sont commandés et/ou variés sur la base d'hétérogénéités à petite échelle qui sont déterminées au moyen de la technique de l'information et du contrôle des appareils.

20. Procédé selon l'une quelconque des revendications 10 à 19, dans lequel une stratégie est mémorisée dans l'unité informatique (20), qui limite, lors du point de commutation entre les profils de pulvérisation (36), des fluctuations de pression et/ou de quantité dues à la régulation.

21. Procédé selon l'une quelconque des revendications 10 à 20, dans lequel les paramètres (44) des profils de pulvérisation (36) sont définissables par un opérateur et/ou peuvent être extraits d'une base de données.

22. Procédé selon l'une quelconque des revendications 10 à 21, dans lequel les profils de pulvérisation (36) peuvent être définis de manière à ce que leurs paramètres (44) puissent varier sur la largeur de travail du dispositif de distribution (26).

23. Procédé selon l'une quelconque des revendications 10 à 22, dans lequel les paramètres (44) des profils de pulvérisation (36) sont adaptés en virage sur la base de valeurs déterminées par un capteur de vitesse ou par une pluralité de capteurs de vitesse, dans lequel ledit au moins un capteur de vitesse est associé au dispositif de distribution (26) ou bien aux tringles de distribution de celui-ci.

24. Procédé selon l'une quelconque des revendications 10 à 23, dans lequel les paramètres (44) des profils de pulvérisation (36) sont adaptés en virage sur la base de valeurs déterminées par un gyroscope ou par une pluralité de gyroscopes, dans lequel ledit au moins un gyroscope est associé au dispositif de distribution (26) ou bien aux tringles de distribution de celui-ci et/ou à un véhicule tracteur.
